# FASCICULE DE BREVET EUROPEEN

(11) **EP 1 381 524 B1**
(45) Date de publication et mention de la délivrance du brevet: **16.03.2005**
(21) Numéro de dépôt: 02735498.4
(22) Date de dépôt: 24.04.2002
(51) Int. Cl.: B60B 33/02

(54) **DISPOSITIF APTE A AMELIORER LA MANIABILITE D'UN CHARIOT DE TRANSPORT**
VORRICHTUNG ZUR VERBESSERUNG DER MANÖVRIERFÄHIGKEIT EINES TRANSPORTWAGENS
DEVICE FOR IMPROVING THE MANOEVRABILITY OF A TROLLEY

(30) Priorité: 25.04.2001 FR 0105580
(43) Date de publication de la demande: 21.01.2004
(73) Titulaire: Gallee, Bernard, 22100 Dinan (FR); MALOEUVRE, Robert, F-44600 Saint Nazaire (FR)
(72) Inventeur: Gallee, Bernard, 22100 Dinan (FR); MALOEUVRE, Robert, F-44600 Saint Nazaire (FR)
(74) Mandataire: Wagret, Frédéric
(86) Numéro de dépôt international: PCT/FR2002/001415
(87) Numéro de publication internationale: WO 2002/085645

(56) Documents cités:
- EP-A- 0 625 434
- FR-A- 2 783 463
- GB-A- 2 279 242
- US-A- 3 924 292

## Description

La présente invention concerne un dispositif destiné à améliorer la maniabilité des chariots de transport utilisés dans les magasins du type à libre service tels que les grandes surfaces.

Les chariots de type connu peuvent être classés en deux grandes familles, l'une regroupant les chariots à quatre roues multidirectionnelles, l'autre englobant ceux dont les deux roues arrière sont fixes.

Cependant, quelle que soit la technologie employée, les chariots de type connu ne sont pas d'une conduite aisée.

En effet, dans le cas des chariots à quatre roues multidirectionnelles, la conduite dudit chariot se révèle être très difficile, et particulièrement dans le cas de fortes charges et sur des plans inclinés. Malgré l'avantage certain de pouvoir déboîter latéralement, les quatre roues multidirectionnelles entraînent des changements de direction difficiles à mener.

Par ailleurs, dans le cas des chariots comportant deux roues arrière fixes, la conduite est très sensiblement améliorée mais le blocage des roues arrière entraîne un rayon de braquage important et l'impossibilité de déboîter latéralement.

On connaît, par le brevet français N° 2 783 463, un dispositif selon le préambule de la revendication 1 permettant d'améliorer la conduite d'un lit ou d'un fauteuil à usage médical ou paramédical.

Ce document décrit un dispositif élastique comportant un ressort et adaptable, soit sur une cinquième roue d'un brancard ou d'un fauteuil roulant, soit sur l'une des roues existantes.

Ce dispositif connu comporte un galet destiné à coopérer avec un chemin de came comprenant des découpes concaves afin de caler la roue auquel le dispositif est appliqué dans une direction privilégiée de roulement.

Cependant, ce dispositif de l'art antérieur étant élastique, l'effort appliqué à la roue dépend donc du tarage du ressort employé et non pas de la charge disposée sur le support roulant ainsi équipé.

La réaction s'exerçant sur les roues, transversalement à la direction d'avancement du support roulant, ne peut donc être proportionnelle à la charge embarquée.

Il s'ensuit une conduite rendue difficile dans le cas de fortes charges, difficultés augmentées dans le cas de sol incliné.

Dans ce contexte, la présente invention pallie les inconvénients de l'art antérieur en proposant un dispositif anti-dérive pour support roulant tel qu'un chariot permettant d'améliorer sa maniabilité, notamment dans le cas de fortes charges, tout en préservant la possibilité de déboîter latéralement ou de conserver un rayon de braquage faible.

Pour ce faire l'invention est telle que définie dans la revendication 1. Avantageusement des exemples particuliers de l'invention sont définis par l'objet des revendications 2 et 3.

Avantageusement, les premiers moyens comportent un fourreau apte à coulisser sur le pivot de la roue et les seconds moyens sont solidaires d'une chape associée à la roue.

Selon une forme préférée de réalisation, la came présente un profil asymétrique et le galet ainsi que la came présentent un profil sensiblement conique.

L'invention concerne, en outre, un chariot de transport, dont au moins l'une de ses roues est équipée d'un dispositif selon l'invention.

Avantageusement, les deux roues arrière sont équipées d'un dispositif conforme à l'invention.

L'invention sera mieux comprise à la lumière de la description qui suit, se rapportant à un exemple de réalisation illustratif et en aucun cas limitatif, en référence aux dessins annexés dans lesquels :
- la figure 1 est une vue de côté en coupe partielle d'une forme de réalisation du dispositif selon l'invention selon une première position ;
- la figure 2 est une vue de côté en coupe partielle du dispositif de la figure 1 dans une seconde position ;
- la figure 3 est une vue en perspective d'un détail de réalisation de l'invention ;
- la figure 4 est une vue partielle de côté de la forme de réalisation de l'invention représentée aux figures 1 et 2 ;
- la figure 5 est une vue schématique de dessus d'un chariot de transport et dont les roues arrière sont équipées du dispositif selon l'invention ;
- les figures 6 et 7 sont des représentations schématiques de formes de réalisations différentes du dispositif selon l'invention.

Dans toute la description qui suit, les termes « proximal » et « distal » qualifient respectivement des éléments du dispositif proches et éloignés du sol S, sensiblement horizontal.

Avantageusement, le présent dispositif anti-dérive est appliqué aux deux roues arrière d'un chariot de transport tel que ceux utilisés dans les magasins du type à libre-service, ledit chariot de transport présentant quatre roues multidirectionnelles.

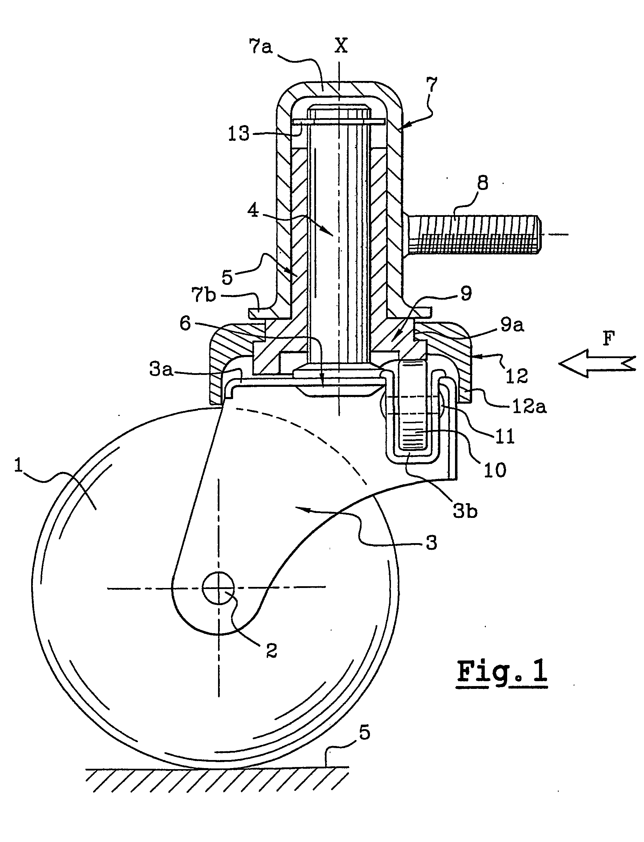

La figure 1 représente, vue en coupe partielle de côté, une première forme de réalisation du dispositif selon l'invention, appliquée à une roue arrière 1 d'un chariot de transport, la figure 1 correspondant à une position en marche avant dudit chariot de transport.

La roue 1, reposant sur le sol S, est mobile en rotation autour de son axe 2 disposé sensiblement parallèlement au sol S.

L'axe de rotation 2 de la roue 1 est supporté par une chape 3 présentant deux faces parallèles de forme sensiblement triangulaire et disposées de part et d'autre de la roue 1.

La chape 3, réalisée par exemple en tôle pliée ou mécano-soudée, comporte une face supérieure 3a sensiblement horizontale liée en rotation à un pivot 4 sensiblement vertical d'axe X.

Ainsi, la roue 1 liée à la chape 3 est mobile en rotation autour de l'axe vertical X par l'intermédiaire du pivot 4, qui, de manière avantageuse, ne se trouve pas à l'aplomb de l'axe de rotation 2 de la roue 1.

Le pivot 4 est un arbre sensiblement cylindrique apte à coulisser dans un fourreau 5 de forme sensiblement complémentaire, selon un mouvement de translation d'axe X. La rotation relative entre le pivot 4 et le fourreau 5 peut éventuellement être bloquée par tous moyens connus (rainure, clavette, etc), du moment que la liaison pivot 6 entre le pivot 4 et la chape 3 permet d'assurer la rotation de la roue 1 autour de l'axe X.

Le fourreau 5 est lié solidairement à un support 7 associé au bâti du chariot de transport (non représenté) par l'intermédiaire d'une tige filetée 8 rendue solidaire du support 7 par tous moyens connus tels qu'une soudure.

Le support 7 présente avantageusement une forme tubulaire complémentaire de celle du fourreau 5, et est fermé à son extrémité distale par une face 7a.

Selon la forme de réalisation illustrée à la figure 1, le fourreau 5 est emmanché à force dans le support 7 afin que ces deux éléments ne présentent aucun degré de liberté relatif.

Le fourreau 5 présente, à son extrémité proximale, une collerette 9 apte à venir en butée contre une collerette correspondante 7b située dans la partie proximale du support 7.

La collerette 9 du fourreau 5 fait office de came apte à coopérer avec un galet 10 monté à rotation selon un axe sensiblement horizontal 11 solidaire de la chape 3.

En effet, la face supérieure 3a de la chape 3 présente un évidement 3b dans lequel est logé le galet 10 disposé sensiblement perpendiculairement à la roue 1.

La came 9 comporte un chemin de came comprenant différents secteurs sur lesquels roule le galet 10 lors de la rotation de la roue 1 et de la chape 3 autour de l'axe vertical X du pivot 4.

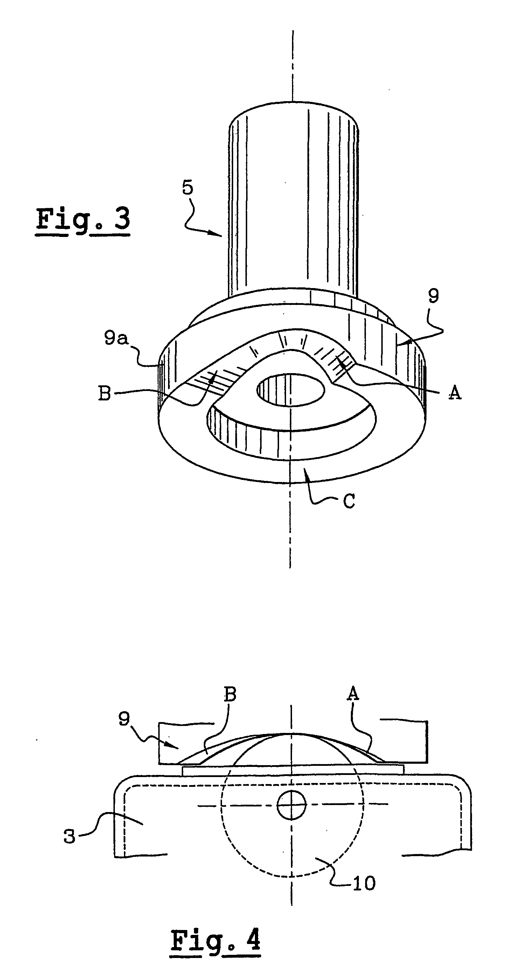

Le chemin de came de la came 9 comporte un secteur concave 14 ainsi qu'un secteur convexe 15. La conformation particulière des différents secteurs du chemin de came sera détaillée en liaison avec les figures 3 et 4. Dans le cas de la figure 1, en position de marche avant du chariot, le dispositif selon l'invention présente un encombrement minimum ; le galet 10 étant en contact avec le secteur concave 14 de la came 9, le bâti se trouve dans sa position basse.

La came 9 présente'en outre, sur sa périphérie, un épaulement 9a sur lequel est monté une coupelle de protection 12 destinée à protéger le dispositif des poussières, des projections et des chocs contre les rayonnages. La coupelle de protection 12 permet également d'empêcher que les utilisateurs, ou des enfants, ne se coincent les doigts dans le dispositif de l'invention.

A ce titre, la coupelle de protection 12 présente une jupe sensiblement verticale 12a, coiffant la liaison pivot centrale 6 ainsi que le galet 10 parcourant le chemin de came de la came 9.

Ladite coupelle de protection 12 peut être rendue solidaire de la came 9 ou être libre en rotation autour de ladite came 9.

Un anneau élastique 13 peut avantageusement être prévu au niveau de l'extrémité distale du pivot 4, opposé à la liaison pivot 6, afin d'empêcher la sortie du pivot 4 de son fourreau 5 lorsque, par exemple, le chariot est soulevé.

Un ressort peut, en outre, être interposé entre l'anneau élastique 13 et l'extrémité distale du fourreau 5 afin d'assurer un contact permanent entre la came 9 et le galet 10.

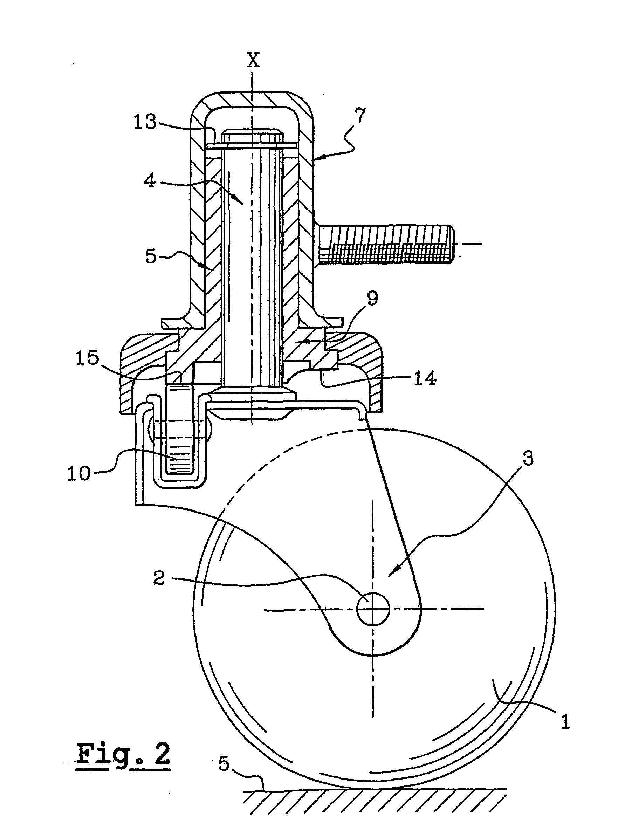

La figure 2 représente le dispositif selon l'invention illustré à la figure 1 dans une seconde position, position correspondante à une marche arrière du chariot.

La roue 1 ainsi que la chape 3 ont effectué une rotation de 180° autour de l'axe X du pivot 4, entraînant dans leur rotation le galet 10 en contact avec le chemin de came de la came 9.

En passant du secteur concave 14 du chemin de came au secteur convexe 15, le galet 10 exerce un effort vertical sur la came 9 qui repousse le support 7, provoquant ainsi un déplacement vers le haut du bâti du chariot 7, entraînant le déplacement de son centre de gravité vers le haut.

L'ensemble du secteur convexe 15 est plan, n'entraînant aucune variation de hauteur du bâti du chariot lorsque le galet 10 le parcoure. De plus, comme il sera vu ultérieurement, aucun effort ne s'exerce transversalement sur la roue 1.

La figure 3 est une vue en perspective du fourreau 5 comportant la collerette 9 faisant office de came.

Le chemin de came de la came 9 avec lequel le galet 10 est en contact présente un secteur concave 14 ainsi qu'un secteur convexe 15.

La partie concave 14 dudit chemin de came comporte un secteur A dit « fort », car il présente une pente importante, ainsi qu'un secteur B dit « faible », dont la déclivité est plus faible.

Lorsque le galet 10 parcourt le secteur fort A, la réaction anti-dérive qui s'exerce transversalement sur la roue 1 est relativement importante. Ce secteur fort A permet, en marche avant du chariot de transport, de faciliter la conduite dudit chariot en produisant un effet de rail qui tend à empêcher la roue 1 de sortir de l'axe longitudinal dans lequel elle se trouve.

En effet, lorsque les fourreaux 5 sont convenablement emmanchés dans les supports 7, la rotation des roues 1 autour de l'axe X du pivot 4 est contrariée par le secteur fort A du chemin de came de la came 9.

Le secteur faible B correspond à une zone où, lorsque le galet 10 est en contact avec cette zone, la force anti-dérive qui s'exerce sur la roue 1 est relativement faible.

Ainsi, lors d'une rotation du chariot entraînant le galet 10 en contact du secteur faible B, la réaction transversale est plus faible, autorisant une rotation de la roue 1 autour de l'axe X du pivot 4 plus aisée que dans le cas du secteur fort A.

Le chemin de came de la came 9 comporte en outre un secteur convexe 15 correspondant à une troisième zone C dite « neutre », où la réaction transversale et donc l'effet anti-dérive s'exerçant sur la roue 1 est nul.

Lorsque le galet 10 est en contact avec la zone neutre C (cas de la figure 2 où le chariot est dans une position de recul), aucun effort ne s'exerce transversalement sur la roue 2 autorisant une grande maniabilité du chariot de transport.

La figure 4 est une vue partielle de côté selon la flèche F de la figure 1, en l'absence de la coupelle de protection 12.

La figure 4 illustre l'asymétrie du chemin de came de la came 9, due à la différence de pente entre les secteurs fort A et faible B.

On comprend que, lors de la rotation de la roue 1 autour de l'axe du pivot 4, le galet 10 parcoure plus difficilement le secteur fort A que le secteur faible B, engendrant une force de réaction plus forte dans le cas du secteur A que dans celui du secteur B.

En outre, plus la charge appliquée au chariot de transport est importante, plus la réaction engendrée au niveau du galet 10, et donc au niveau de la roue 1 de manière transversale, est importante.

Ainsi, la force anti-dérive qui s'exerce au niveau de la roue 1 est d'autant plus importante que la charge appliquée au chariot est importante. Cet avantage est déterminant notamment dans le cas de la conduite du chariot sur un sol incliné et sous forte charge.

Le passage du galet 10 de la partie convexe 15 à la partie concave 14 du chemin de came de la came 9 lors de la rotation de la roue 1 entraîne une variation de hauteur du centre de gravité du chariot, engendrant une variation de la force anti-dérive s'appliquant aux roues arrière du chariot.

Ainsi, l'élévation progressive du centre de gravité du chariot engendre une réaction transversale croissante au niveau des roues arrière générant un effet anti-dérive important, jusqu'à ce que cette réaction transversale s'annule lorsque le galet parcourt la zone neutre C (cas en particulier d'un mouvement de recul du chariot).

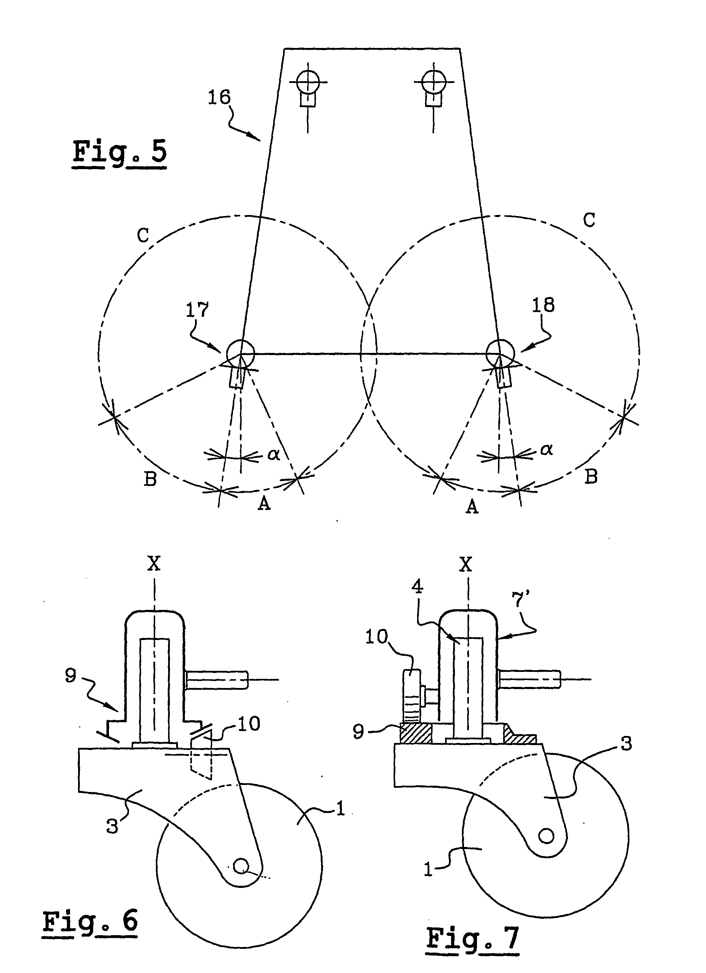

La figure 5 illustre schématiquement en vue de dessus un chariot 16 équipé de quatre roues multidirectionnelles, les deux roues arrière 17 et 18 étant dotées du dispositif selon l'invention.

Avantageusement, les fourreaux 5 sont emmanchés dans les supports 7 respectifs de manière que les roues arrière 17 et 18 présentent une position non pas parallèle à l'axe longitudinal Y du chariot 16, mais légèrement ouverte d'un angle α choisi convenablement.

Ainsi, la conduite en marche avant du chariot 16 s'en trouve améliorée grâce à l'effet anti-dérive obtenu lorsque les galets parcourent les secteurs A et B, et le pivotement où la marche arrière est facilitée par le passage des galets sur le secteur neutre C.

Afin d'assurer une meilleure efficacité de l'invention, les dispositifs sont montés en symétrie par miroir par rapport à l'axe longitudinal Y du chariot 16.

Dans le cas d'un virage sur la droite, le galet 10 de la roue arrière 17 est en contact avec le secteur fort A engendrant une réaction anti-dérive importante et le galet 10 de la roue arrière 18 se trouve en contact avec le secteur faible B, engendrant une réaction moins importante, le tout combiné facilitant le virage du chariot 16.

Dans le cas d'un pivotement sur lui-même du chariot 16 sur la droite, le galet 10 de la roue arrière 17 se trouve en contact avec l'extrémité du secteur fort A engendrant une réaction transversale très importante, et le galet 10 de la roue arrière 18 est lui en contact avec la zone neutre C engendrant une réaction nulle, le tout combiné facilitant le pivotement sur lui-même du chariot 16.

La figure 6 montre schématiquement une variante de réalisation de l'invention où le galet 10 ainsi que le chemin de came de la came 9 présentent un profil conique, permettant d'améliorer le contact entre le chemin de came et le galet 10, dans le cas notamment de charges importantes appliquées à la roue 1.

La figure 7 illustre schématiquement une seconde forme de réalisation de l'invention où la came 9 est cette fois-ci solidaire de la chape 3 et le galet 10 solidaire du bâti du chariot par l'intermédiaire d'un support 7'.

Le principe de fonctionnement est strictement identique à celui décrit précédemment.

La rotation de la roue 1 et de la chape 3 autour de l'axe X du pivot 4, entraîne la rotation de la came 9 en contact avec le galet 10 solidaire du bâti.

La conformation particulière du chemin de came de la came 9 entraîne, lors de la rotation de la roue 1 autour de l'axe X, une variation de hauteur du centre de gravité du chariot de transport générant ainsi des forces de réaction transversales sur la roue 1 destinée à faciliter la conduite et la maniabilité dudit chariot de transport.

La présente invention, de conception simple et économique, permet ainsi de faciliter la conduite en ligne droite et en courbe d'un chariot de transport par la génération de force anti-dérive dépendante de la charge appliquée audit chariot.

En outre, cette amélioration de la conduite n'est pas réalisée au détriment de la maniabilité du chariot qui peut aisément être déplacé transversalement ou encore pivoter sur lui-même.

Un aspect non négligeable de la présente invention, est que le dispositif anti-dérive est applicable au parc existant de chariots de transport, sans entraîner de lourdes modifications desdits chariots, seul le remplacement des roues arrière devant être effectué.

## Revendications

1. Dispositif destiné à équiper les roues (1) d'un chariot de transport (16) afin d'améliorer la maniabilité dudit chariot (16), chacune desdites roues (1) étant liée au bâti du chariot par un pivot (4) vertical mobile par rapport au bâti en translation selon son axe (X) et autour duquel la roue (1) est susceptible de tourner, ledit dispositif comportant des premiers moyens (9) solidaires du bâti du chariot en contact avec des seconds moyens (10) solidaires de la roue (1), les premiers (9) ou les seconds moyens (10) comportant un galet, les autres moyens parmi les premiers (9) ou les seconds moyens 10) comportant alors une came dont le chemin de came présente au moins un secteur concave (14) et un secteur convexe (15), **caractérisé en ce que** le secteur concave (14) de ladite came présente un profil asymétrique de manière à engendrer des réactions transversales différentes dans la roue (1).

2. Dispositif selon la revendication 1, **caractérisé en ce que** le secteur concave (14) comporte une partie (A) présentant une pente importante ainsi qu'une partie (B) de déclivité plus faible.

3. Dispositif selon l'une des revendications 1 ou 2, **caractérisé en ce que** le secteur convexe (15) présente un profil sensiblement plan.

4. Dispositif selon l'une des revendications 1 ou 2, **caractérisé en ce que** la came (9) ainsi que le galet (10) présentent un profil conique.

5. Dispositif selon l'une des revendications 1 à 4, **caractérisé en ce que** les seconds moyens (10) sont solidaires d'une chape (3) associée à la roue (1).

6. Chariot de transport (16), **caractérisé en ce qu'**au moins l'une de ses roues (17, 18) est équipée d'un dispositif selon l'une des revendications 1 à 5.

7. Chariot de transport (16), **caractérisé en ce que** ses deux roues arrière (17, 18) sont équipées d'un dispositif selon l'une des revendications 1 à 5.

8. Chariot de transport (16), selon la revendication 7, **caractérisé en ce que** lesdites roues arrière (17, 18) présentent une position telle que leur plan forme un angle (α) fixe, par rapport à l'axe longitudinal (Y) du chariot.

9. Chariot selon la revendication 8, **caractérisé en ce qu'**il comporte deux dispositifs, chacun associé à l'une des roues arrière, lesdits dispositifs étant montés en symétrie par miroir, par rapport à l'axe longitudinal (Y) du chariot (16).

## Claims

1. Device intended for equipping the wheels (1) of a trolley (16) in order to improve the manoeuvrability of said trolley (16), each of said wheels (1) being connected to the frame of the trolley by a vertical pivot (4) mobile with respect to the frame in translation along its axis (X) and about which the wheel (1) is capable of rotating, said device comprising first means (9) fast with the frame of the trolley in contact with second means (10) fast with the wheel (1), the first (9) or the second (10) means comprising a roller, the other means from among the first (9) or the second means (10) in that case comprising a cam of which the cam groove presents at least one concave sector (14) and one convex sector (15), **characterized in that** the concave sector (14) of said cam presents an asymmetrical profile so as to generate different transverse reactions in the wheel (1).

2. Device according to Claim 1, **characterized in that** the concave sector (14) comprises a part (A) presenting a considerable slope as well as a part (B) of lesser declivity.

3. Device according to one of Claims 1 or 2, **characterized in that** the convex sector (15) presents a substantially planar profile.

4. Device according to one of Claims 1 or 2, **characterized in that** the cam (9) as well as the roller (10) present a conical profile.

5. Device according to one of Claims 1 to 4, **characterized in that** the second means (10) are fast with a fork joint (3) associated with the wheel (1).

6. Trolley (16), **characterized in that** at least one of its wheels (17, 18) is equipped with a device according to one of Claims 1 to 5.

7. Trolley (16), **characterized in that** its two rear wheels (17, 18) are equipped with a device according to one of Claims 1 to 5.

8. Trolley (16) according to Claim 7, **characterized in that** said rear wheels (17, 18) present a position such that their plane forms a fixed angle (α) with respect to the longitudinal axis (Y) of the trolley.

9. Trolley according to Claim 8, **characterized in that** it comprises two devices, each associated with one of the rear wheels, said devices being mounted in mirror symmetry with respect to the longitudinal axis (Y) of the trolley (16).

## Patentansprüche

1. Vorrichtung, welche dazu bestimmt ist, dass die Räder (1) eines Transportwagens (16) mit dieser ausgestattet werden, um die Manövrierfähigkeit des Wagens (16) zu verbessern, wobei jedes der Räder (1) mit dem Gestell des Wagens über ein Drehgelenk (4) verbunden ist, welches in Bezug auf das Gestell senkrecht in Translation entlang seiner Achse (X) beweglich ist, und um welche das Rad (1) zu drehen in der Lage ist, wobei die Vorrichtung erste Mittel (9) aufweist, die einstückig mit dem Gestell des Wagens sind und in Kontakt sind mit zweiten Mitteln (10), die einstückig mit dem Rad (1) sind, wobei die ersten (9) oder zweiten Mittel (10) eine Laufrolle aufweisen, und die anderen Mittel von den ersten (9) oder zweiten Mitteln (10) einen Nocken aufweisen, dessen Nockenweg wenigstens einen konkaven Bereich (14) und einen konvexen Bereich (15) aufweist, **dadurch gekennzeichnet, dass** der konkave Bereich (14) des Nocken ein asymmetrisches Profil aufweist, um unterschiedliche transversale Reaktionen in dem Rad (1) zu erzeugen.

2. Vorrichtung gemäss Anspruch 1, **dadurch gekennzeichnet, dass** der konkave Bereich (14) einen Teil (A) mit einer beträchtlichen Neigung aufweist sowie einen Teil (B) mit geringerer Abschrägung.

3. Vorrichtung gemäss einem der Ansprüche 1 oder 2, **dadurch gekennzeichnet, dass** der konvexe Bereich (15) ein im wesentlichen ebenes Profil aufweist.

4. Vorrichtung gemäss einem der Ansprüche 1 oder 2, **dadurch gekennzeichnet, dass** der Nocken (9) sowie die Laufrolle (10) ein konisches Profil aufweisen.

5. Vorrichtung gemäss einem der Ansprüche 1 bis 4, **dadurch gekennzeichnet, dass** die zweiten Mittel (10) einstückig ausgebildet sind mit einem Bügel (3), der mit dem Rad (1) verbunden ist.

6. Transportwagen (16), **dadurch gekennzeichnet, dass** wenigstens eines der Räder (17, 18) mit einer Vorrichtung gemäss einem der Ansprüche 1 bis 5 ausgestattet ist.

7. Transportwagen (16), **dadurch gekennzeichnet, dass** seine beiden Hinterräder (17, 18) mit einer Vorrichtung gemäss einem der Ansprüche 1 bis 5 ausgestattet sind.

8. Transportwagen (16) gemäss Anspruch 7, **dadurch gekennzeichnet, dass** die Hinterräder (17, 18) eine solche Position aufweisen, dass ihre Ebene einen festen Winkel α in Bezug auf die Längsachse (Y) des Wagens bildet.

9. Wagen gemäß Anspruch 8, **dadurch gekennzeichnet, dass** dieser zwei Vorrichtungen aufweist, wobei jede mit einem der Hinterräder verbunden ist, wobei die Vorrichtungen spiegelverkehrt befestigt sind in Bezug auf die Längsachse (Y) des Wagens (16).
